# EUROPÄISCHE PATENTSCHRIFT

(11) **EP 2 095 910 B1**
(45) Veröffentlichungstag und Bekanntmachung des Hinweises auf die Patenterteilung: **16.02.2011**
(21) Anmeldenummer: 08020926.5
(22) Anmeldetag: 03.12.2008
(51) Int. Cl.: B25F 5/00

(54) **Elektrohandwerkzeuggerät mit Magneten zum Absorbieren von Staub**
Electric tool machine with magnets to absorb dust
Outil électro-manuel doté d'aimants destinés à absorber la poussière

(30) Priorität: 28.02.2008 DE 102008011589
(43) Veröffentlichungstag der Anmeldung: 02.09.2009
(73) Patentinhaber: Metabowerke GmbH, 72622 Nürtingen (DE)
(72) Erfinder: Johnen, Markus, Dr., 72581 Dettingen/Erms (DE); Stickel, Wolfgang, Dip-Ing., 72660 Beuren (DE)
(74) Vertreter: Raunecker, Klaus Peter

(56) Entgegenhaltungen:
- EP-A- 0 425 492
- WO-A-2008/018611
- JP-A- 11 178 282

## Beschreibung

Die Erfindung betrifft ein Elektrohandwerkzeuggerät mit einem durchzugsbelüfteten Gehäusekörper mit Ein- und Ausströmöffnungen für den Kühlluftstrom, in welchem Gehäusekörper die elektromotorischen Komponenten des Geräts, insbesondere ein permanentmagnetisch erregter akkubetriebener Motor aufgenommen sind, und mit einem im Bereich des Kühlluftstroms vorgesehenen Magneten zum Absorbieren von magnetischem oder magnetisierbarem Staub.

Derartige Elektrohandwerkzeuggeräte sind bekannt aus WO-A-200B/018611 A1 und aus JP-A-11-178282 sowie aus EP 0 425 492 B1. Bei dem letztgenannten Elektrohandwerkzeuggerät ist im Bereich eines Spalts zwischen Rotor und Stator des Elektromotors, und zwar in Richtung des Kühlluftstroms den elektromotorischen Komponenten nachgeordnet (abstromseitig), ein ringförmiger

Permanentmagnet vorgesehen, welcher verhindern soll, dass Metallpartikel in diesen Ringspalt eindringen, wo der magnetische Kraftfluss zwischen Rotor und Stator besonders groß ist. Der Kühlluftstrom wird im Übrigen durch Kühlluftkanäle innerhalb der Statorwicklung hindurchgeführt.

Der vorliegenden Erfindung liegt die Aufgabe zugrunde, den Schutz der elektromotorischen Komponenten eines gattungsgemäßen Elektrohandwerkzeuggeräts, insbesondere eines permanentmagnetisch erregten akkubetriebenen Elektrohandwerkzeuggeräts, weiter zu verbessern. Gerade bei permanentmagnetisch erregten Elektromotoren besteht definitiv das Problem, dass bei Arbeiten unter extremen Bedingungen (Metallbearbeitung, insbesondere auf Werften oder bei Zerlegeprozessen, Verschrottung) magnetisierbarer Staub und Partikel die Funktionsfähigkeit des Elektrohandwerkzeuggeräts beeinträchtigen können.

Diese Aufgabe wird bei einem Elektrohandwerkzeuggerät der genannten Art erfindungsgemäß dadurch gelöst, dass in axialer Richtung zwischen den Einströmöffnungen und den elektromotorischen Komponenten des Geräts wenigstens zwei Magnete vorgesehen sind und dass eine elektrisch mit den wenigstens zwei Magneten zusammenwirkende Einrichtung vorgesehen ist, mittels derer feststellbar ist, ob eine wesentliche Menge magnetisierbaren Staubs an den Magneten angesammelt ist, und dass solchenfalls eine Steuerungsmaßnahme ausführbar ist.

Dadurch, dass die Magnete in Strömungsrichtung vor den elektromotorischen Komponenten des Geräts angeordnet sind, lässt sich im Wesentlichen der gesamte im Kühlluftstrom mitgeführte magnetisierbare Partikelstaub zurückhalten, so dass er nicht die elektromotorischen Komponenten beaufschlagt. Hierdurch kann ein besonders wirkungsvoller Schutz der elektromotorischen Komponenten erreicht werden. Die Erfindung erweist sich in besonderem Maße bei permanentmagnetisch erregten, insbesondere akkubetriebenen Geräten als vorteilhaft, da diese nicht nur im Betrieb ein magnetisches Feld aufweisen (welches durch Ankerwicklung uns Statorwicklung nur im Betrieb erzeugt wird), sondern infolge ihres Permanentmagnets ein dauerhaftes Magnetfeld im Bereich der elektromotorischen Komponenten haben. Magnetischer oder magnetisierbarer Staub, der sich dort absetzt, ist für einen Benutzer nicht entfernbar. Hierdurch können im Extremstfall sogar Kurzschlüsse innerhalb des Geräts entstehen. Durch die erfindungsgemäße Anordnung der Staubfangmagnete in Strömungsrichtung vor den elektromotorischen Komponenten kann magnetischer oder magnetisierbarer Staub aber erst gar nicht zu den Permanentmagneten des Elektromotors gelangen. Nach dem weiteren Erfindungsgedanken wird über die elektrisch mit dem Magneten zusammenwirkende Einrichtung festgestellt, ob bereits eine wesentliche Menge magnetisierbaren partikelförmigen Staubs an den Magneten angesammelt ist. Ist dies der Fall, dann wird eine Steuerungsmaßnahme im weitesten Sinne ausgeführt. Diese Steuerungsmaßnahme kann beispielsweise in der Ausgabe eines optisch und/oder akustisch wahrnehmbaren Anzeigesignals bestehen, oder sogar die selbsttätige Abschaltung des Geräts umfassen. Hierfür sind geeignete Anzeigemittel bzw. Steuermittel vorgesehen. Dies dient dem Ziel, dem Benutzer anzuzeigen, dass eine Reinigung der durch die Magnete gebildeten

Staubfangvorrichtung durchgeführt werden soll.

Die erwähnte elektrisch mit den Magneten zusammenwirkende Einrichtung kann dabei in an sich beliebiger Weise ausgebildet sein. Es wäre beispielsweise denkbar, dass durch Kapazitätsänderungen bei den Magneten auf die Menge zurückgehaltenen Staubs geschlossen wird. Nach einer weiteren vorteilhaften Ausführungsform der Erfindung ist mittels der elektrisch mit den Magneten zuammenwirkenden Einrichtung feststellbar, ob ein elektrischer Kontakt zwischen den Magneten besteht. Dieser elektrische Kontakt wird bei zunehmender Zusetzung der Magnete mit magnetischem oder magnetisierbarem Staub durch langgestreckte Brücken entlang der Magnetfeldlinien zwischen den Magneten gebildet, die damit auch den Strömungspfad für den Kühlluftstrom im wahrsten Sinne des Wortes zusetzen und blockieren, so dass auch die Gefahr besteht, dass keine effektive Kühlung der elektromotorischen Komponenten mehr sichergestellt ist. Die elektrisch mit den Magneten zusammenwirkende Einrichtung kann in diesem Fall auf besonders einfache Weise ausgebildet werden; sie braucht hierfür im Wesentlichen nur ohmsche Elemente zu umfassen, und es kann dann durch geeignete, an sich bekannte elektrische oder elektronische Maßnahmen festgestellt werden, ob zwischen den Magneten eine elektrisch leitende Verbindung gegeben ist, die dann nur von zurückgehaltenem Partikelstaub herrühren kann.

Es wäre beispielsweise denkbar, dass die Staubfangmagnete in der Nähe der Lufteinströmöffnungen vorgesehen sind, so dass zum Abreinigen der Magnete der Staub gewissermaßen aus dem Gehäusekörper herausgeschüttelt werden kann. Aufgrund der magnetischen Wirkung der Staubfangmagnete erweist es sich indessen als vorteilhaft, wenn der Gehäusekörper zum Abreinigen der Magnete öffenbar ist. Weiter erweist es sich als vorteilhaft, wenn die Magnete aus dem Gehäusekörper entnehmbar sind und so beispielsweise mittels eines Tuchs abgereinigt werden können.

Hierfür erweist es sich als vorteilhaft, wenn die Magnete in dem Gehäusekörper in einer Schiebesitzaufnahme angeordnet sind und so nach Öffnen des Gehäusekörpers entlang der Schiebesitzaufnahme herausziehbar sind.

In Weiterbildung dieses Erfindungsgedankens erweist es sich als vorteilhaft, wenn die Magnete nicht unlösbar sondern in ihrer bestimmungsgemäßen Anordnung innerhalb des Gehäusekörpers lösbar, insbesondere federbelastet, elektrisch kontaktiert sind.

Die insbesondere zwei und mehreren Magnete können grundsätzlich beliebig ausgebildet und angeordnet werden, solange sie derart im Bereich des Kühlluftstroms zwischen den Lufteintrittsöffnungen und den elektromotorischen Komponenten des Geräts angeordnet sind, dass sie im Wesentlichen den gesamten magnetischen oder magnetisierbaren Partikelstaub aus dem Kühlluftstrom zurückzuhalten vermögen. Hierfür erweist es sich als vorteilhaft, wenn die Magnete im Schnitt senkrecht zur Längsrichtung des Gehäusekörpers betrachtet gewölbt, insbesondere schalenförmig gebogen ausgebildet sind. Die Magnete können so einen Strömungspfad des Kühlluftstroms gewissermaßen allseitig in Umfangsrichtung umschließen. Hierdurch kann eine sehr effektive Staubrückhaltung erzielt werden.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der Erfindung. In der Zeichnung zeigt:
- Figur 1: eine schematische Ansicht eines Elektrohandwerkzeuggeräts, insbesondere in Form eines Winkelschleifers, zur Verdeutlichung der Anordnung der Magnete zur Staubrückhaltung;
- Figur 2: eine schematische Schnittansicht durch das Elektrohandwerkzeuggerät nach Figur 1 mit Schnittebene II-II;
- Figuren 3a und 3b: eine schematische Darstellung einer mit den Magneten zusammenwirkenden elektrischen Einrichtung.

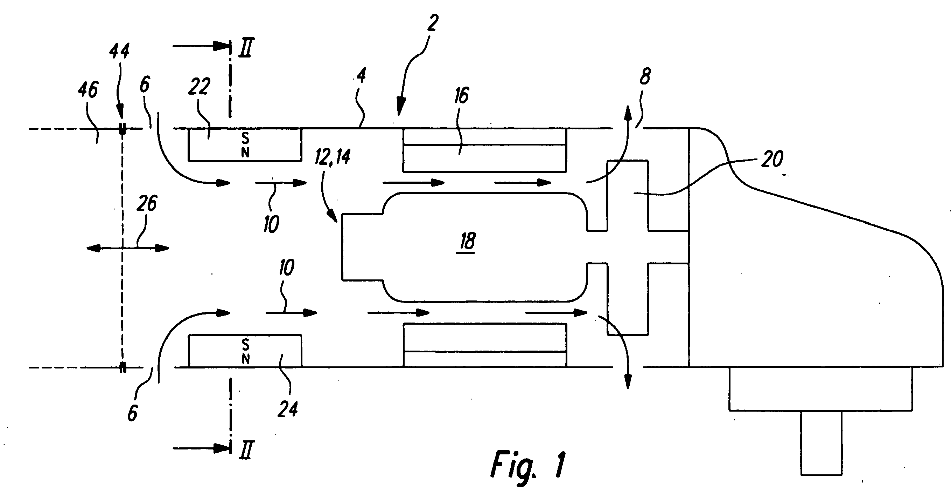

Figur 1 zeigt schematisch ein Elektrohandwerkzeuggerät 2, beispielsweise in Form eines Winkelschleifers, mit einem durchzugsbelüfteten Gehäusekörper 4 mit Einströmöffnungen 6 und Ausströmöffnungen 8 für den durch Pfeile 10 angedeuteten Kühlluftstrom. Ferner angedeutet sind elektromotorische Komponenten 12, die im beispielhaft dargestellten Fall einen permanentmagnetischen und insbesondere akkubetriebenen Elektromotor 14 bilden. Dieser umfasst einen permanentmagnetischen Stator 16 und einen Anker (Rotor) 18. Der Anker 18 ist mit einem radial verdrängenden Lüfterrad 20 drehfest verbunden, welches bei Betrieb des Elektrohandwerkzeuggeräts die

Durchzugsbelüftung bewirkt.

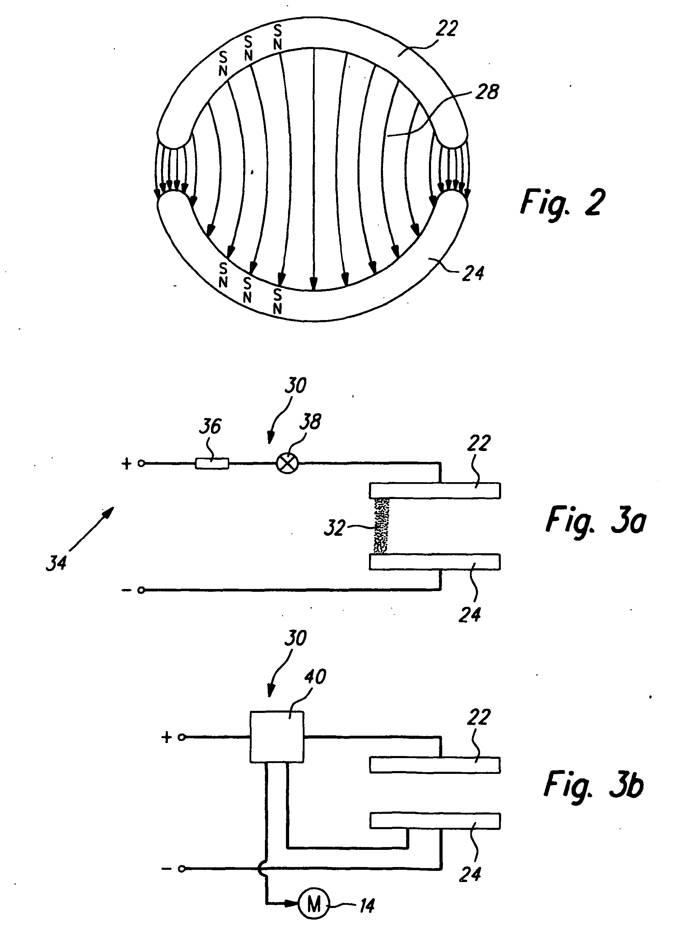

In Strömungsrichtung vor den elektromotorischen Komponenten 12, im Wesentlichen unmittelbar an die Einströmöffnungen 6 anschließend, sind zwei Magnete 22, 24 vorgesehen, die schalenförmig gebogen ausgebildet sind und sich im Wesentlichen in Umfangsrichtung entlang der Innenseite des Gehäusekörpers 4 erstrecken. Diese Magnete 22, 24 bilden ein im Wesentlichen in einer Ebene senkrecht zur Längsrichtung 26 des Gehäusekörpers und zur Richtung des Kühlluftstroms erstrecktes Magnetfeld 28 (s. Figur 2). Der Kühlluftstrom 10 durchströmt dieses Magnetfeld 28, wobei magnetischer oder magnetisierbarer Staub/Partikelschmutz aus dem Kühlluftstrom gegen die Magnete 22, 24 abgelenkt und dort fixiert wird. Auf diese Weise beaufschlagen Staubpartikel nicht die elektromotorischen Komponenten 12. Wie außerdem in den Figuren 3a und 3b angedeutet ist, sind die Magnete 22 und 24 (und gegebenenfalls weitere Magnete) durch eine insgesamt mit dem Bezugszeichen 30 bezeichnete elektrisch mit den Magneten zusammenwirkende Einrichtung kontaktiert. Mittels dieser Einrichtung 30 ist feststellbar, ob eine wesentliche Menge magnetisierbaren Staubs an den Magneten 22, 24 haftet. Insbesondere ist feststellbar, ob zwischen den Magneten 22, 24 ein elektrischer Kontakt besteht. Wenn also die Menge des magnetischen oder magnetisierbaren Staubs derart ist, dass sich entlang der Magnetfeldlinien des Magnetfelds 28 eine langgestreckte brückenartige Verbindung durch magnetischen oder magnetisierbaren Staub bildet (angedeutet durch Bezugszeichen 32 in Figur 3a), so ist dieser elektrische Kontakt durch geeignete elektrische oder elektronische Mittel ohne weiteres feststellbar. Beispielsweise zeigt Figur 3a, dass die Einrichtung 30 schematisch eine Spannungsquelle 34, einen ohmschen Widerstand 36 und eine Lampe 38 umfasst. Wenn zwischen den Magneten 22, 24 keine elektrisch leitende Verbindung besteht, so fließt kein Strom und die Lampe 38 leuchtet nicht. Sobald sich die genannten brückenartigen Verbindungen 32 zwischen den Magneten 22 und 24 aufbauen, so fließt Strom und die Lampe 38 leuchtet. Auf diese Weise stellt das Erleuchten der Lampe 38 eine Steuerungsmaßnahme dar, welche den Benutzer davon in Kenntnis setzt, dass die Staubfangmagnete 22, 24 sich weitgehend zusetzen und der Abreinigung bedürfen.

Figur 3b zeigt schematisch eine Steuerelektronik 40, mittels derer der Beladungszustand der Magnete 22, 24 mit magnetischem oder magnetisierbarem Staub feststellbar ist und dann entsprechend vorgebbaren Bedingungen Steuerungsmaßnahmen ausgeführt werden. Beispielsweise kann die Steuerelektronik 40 neben der Auslösung von optisch und/oder akustisch wahrnehmbaren Anzeigesignalen auch direkt in den Betrieb des Elektrohandwerkzeuggeräts eingreifende Maßnahmen ausführen, also beispielsweise den Elektromotor 14 abschalten.

Weiter lediglich schematisch dargestellt ist bei Bezugszeichen 44 in Figur 1, dass ein hinterer Gehäuseteil 46 in der Längsrichtung 26 abnehmbar ausgebildet ist, so dass ein Benutzer Zugang zu den Magneten 22, 24 erhält. Die Magnete 22, 24 sind beispielsweise in einer in Längsrichtung 26 erstreckten nicht näher dargestellten Schiebesitzaufnahme angeordnet, in der sie dann auch elektrisch kontaktiert sind, insbesondere dadurch, dass die Magnete lösbar gegen einen elektrischen Kontakt, etwa eine Federzunge, anlegbar sind. In dem hinteren Gehäuseteil 46 können auch Akkuzellen untergebracht sein.

Sobald über die elektrisch wirkende Einrichtung festgestellt wird, dass eine wesentliche Menge von magnetischem oder magnetisierbarem Staub an den Magneten 22, 24 vorhanden ist und insbesondere der freie Strömungsquerschnitt für den Kühlluftstrom reduziert ist, wird nach einer Ausführungsform der Erfindung eine Warnmeldung (akustisch und/oder optisch) ausgegeben. Der Benutzer erhält damit den Hinweis, dass er die Magnete 22, 24 abreinigen muss. Hierfür kann er den hinteren Gehäuseteil 40 in Längsrichtung 26 von dem Gehäusekörper 4 abnehmen und erhält so Zugang zu den Fangmagneten, die insbesondere hierfür auch aus dem Gehäusekörper 4 entnommen werden können. Auf diese Weise kann gewährleistet werden, dass auch ein Betrieb des Elektrohandwerkzeuggeräts unter extremen Bedingungen nicht zu einer Beschädigung oder gar Zerstörung des Geräts führt.

## Patentansprüche

1. Elektrohandwerkzeuggerät (2) mit einem durchzugsbelüfteten Gehäusekörper (4) mit Ein- und Ausströmöffnungen (6, 8) für den Kühlluftstrom, in welchem Gehäusekörper (4) die elektromotorischen Komponenten (12) des Geräts aufgenommen sind, insbesondere ein permanentmagnetisch erregter akkubetriebener Motor (14), und mit einem im Bereich des Kühlluftstroms vorgesehenen Magneten (22, 24) zum Absorbieren von magnetischem oder magnetisierbarem Staub, **dadurch gekennzeichnet, dass** in axialer Richtung (26) zwischen den Einströmöffnungen (6) und den elektromotorischen Komponenten (12) des Geräts wenigstens zwei Magnete (22, 24) vorgesehen sind und dass eine elektrisch mit den wenigstens zwei Magneten (22, 24) zusammenwirkende Einrichtung (30) vorgesehen ist, mittels derer feststellbar ist, ob eine wesentliche Menge magnetisierbaren Staubs an den Magneten (22, 24) angesammelt ist, und dass solchenfalls eine Steuerungsmaßnahme ausführbar ist.

2. Elektrohandwerkzeuggerät nach Anspruch 1, **dadurch gekennzeichnet, dass** mittels der elektrisch mit den Magneten (22, 24) zusammenwirkenden Einrichtung (30) feststellbar ist ob ein elektrischer Kontakt zwischen den Magneten (22, 24) besteht und dass solchenfalls eine Steuerungsmaßnahme ausführbar ist.

3. Elektrohandwerkzeuggerät nach Anspruch 1 oder 2, **dadurch gekennzeichnet, dass** die Steuerungsmaßnahme die Ausgabe eines optisch und/oder akustisch wahrnehmbaren Anzeigesignals umfasst.

4. Elektrohandwerkzeuggerät nach Anspruch 1, 2 oder 3, **dadurch gekennzeichnet, dass** die Steuerungsmaßnahme die Abschaltung des Geräts umfasst.

5. Elektrohandwerkzeuggerät nach einem oder mehreren der vorstehenden Ansprüche, **dadurch gekennzeichnet, dass** der Gehäusekörper (4) zum Abreinigen der Magnete (22, 24) öffenbar ist.

6. Elektrohandwerkzeuggerät nach einem oder mehreren der vorstehenden Ansprüche, **dadurch gekennzeichnet, dass** die Magnete (22, 24) aus dem Gehäusekörper (4) entnehmbar sind.

7. Elektrohandwerkzeuggerät nach einem oder mehreren der vorstehenden Ansprüche, **dadurch gekennzeichnet, dass** die Magnete (22, 24) in dem Gehäusekörper (4) in einer Schiebesitzaufnahme angeordnet sind und so nach Öffnen des Gehäusekörpers (4) entlang der Schiebesitzaufnahme herausziehbar sind.

8. Elektrohandwerkzeuggerät nach einem oder mehreren der vorstehenden Ansprüche, **dadurch gekennzeichnet, dass** die Magnete (22, 24) in ihrer bestimmungsgemäßen Anordnung im Gehäusekörper (4) lösbar, insbesondere federbelastet kontaktiert sind.

9. Elektrohandwerkzeuggerät nach einem oder mehreren der vorstehenden Ansprüche, **dadurch gekennzeichnet, dass** die Magnete (22, 24) im Schnitt senkrecht zur Längsrichtung des Gehäusekörpers (4) betrachtet gewölbt, insbesondere schalenförmig gebogen sind.

10. Elektrohandwerkzeuggerät nach einem oder mehreren der vorstehenden Ansprüche, **dadurch gekennzeichnet, dass** die Magnete (22, 24) einen Strömungspfad des Kühlluftstroms umgeben.

## Claims

1. Electric hand tool device (2) with an enclosed-ventilation housing body (4) with inflow and outflow openings (6, 8) for the cooling air flow, in which housing body (4) the electromotive components (12) of the device are accommodated, in particular a battery-powered motor (14) excited by permanent magnet, and with a magnet (22, 24) provided in the area of the cooling air flow for absorbing magnetic or magnetisable dust, **characterised in that** at least two magnets (22, 24) are provided in an axial direction (26) between the inflow openings (6) and the electromotive components (12) of the device and that a device (30) interacting electrically with the at least two magnets (22, 24) is provided, by means of which device it can be ascertained whether a substantial quantity of magnetisable dust has accumulated at the magnets (22, 24), and that in such a case a control action is executable.

2. Electric hand tool device according to claim 1, **characterised in that** by means of the device (30) interacting electrically with the magnets (22, 24) it can be ascertained whether an electrical contact exists between the magnets (22, 24) and that in such a case a control action is executable.

3. Electric hand tool device according to claim 1 or 2, **characterised in that** the control action comprises the output of an optically and/or acoustically perceptible indicator signal.

4. Electric hand tool device according to claim 1, 2 or 3, **characterised in that** the control action comprises the deactivation of the device.

5. Electric hand tool device according to one or more of the preceding claims, **characterised in that** the housing body (4) is openable for cleaning of the magnets (22, 24).

6. Electric hand tool device according to one or more of the preceding claims, **characterised in that** the magnets (22, 24) are removable from the housing body (4).

7. Electric hand tool device according to one or more of the preceding claims, **characterised in that** the magnets (22, 24) are arranged in the housing body (4) in a push-fit receptacle and so can be withdrawn following opening of the housing body (4) along the push-fit receptacle.

8. Electric hand tool device according to one or more of the preceding claims, **characterised in that** the magnets (22, 24) are contacted in their intended arrangement in the housing body (4) detachably, in particular spring-loadedly.

9. Electric hand tool device according to one or more of the preceding claims, **characterised in that** the magnets (22, 24) are dished, in particular curved in a saucer shape, seen in section perpendicular to the longitudinal direction of the housing body (4).

10. Electric hand tool device according to one or more of the preceding claims, **characterised in that** the magnets (22, 24) surround a flow path of the cooling air flow.

## Revendications

1. Outil électrique à main (2); avec un corps de carter (4) ventilé par circulation forcée, comportant des ouvertures d'entrée et de sortie (6, 8) pour le flux d'air de refroidissement, dans lequel corps de carter (4) sont logés les composants électromoteurs (12) de l'outil, en particulier un moteur (14) à excitation par aimant permanent alimenté par un accumulateur, et comportant aussi un aimant (22, 24) ménagé dans la région du flux d'air de refroidissement pour absorber la poussière magnétique ou magnétisable, **caractérisé en ce que**, vus dans la direction axiale (26), au moins deux aimants (22, 24) sont prévus entre les ouvertures d'entrée d'air (6) et les composants électromoteurs (12) de l'outil, et **en ce qu'**il est prévu un dispositif (30) coopérant électriquement avec les au moins deux aimants (22, 24), au moyen duquel il est possible de vérifier si une quantité notable de poussière magnétisable s'est accumulée sur les aimants (22, 24), et **en ce que**, dans ce cas, une disposition de gestion peut être prise.

2. Outil électrique à main selon la revendication 1, **caractérisé en ce que**, au moyen du dispositif (30) qui coopère électriquement avec les aimants (22, 24), il est possible de vérifier s'il y a un contact électrique entre les aimants (22, 24) et **en ce que**, dans ce cas, une disposition de gestion peut être prise.

3. Outil électrique à main selon la revendication 1 ou 2, **caractérisé en ce que** la disposition de gestion comprend l'émission d'un signal avertisseur pouvant être perçu par voie optique et/ou acoustique.

4. Outil électrique à main selon la revendication 1, 2 ou 3, **caractérisé en ce que** la disposition de gestion comprend la mise hors circuit de l'outil.

5. Outil électrique à main selon l'une ou plusieurs des revendications précédentes, **caractérisé en ce que** le corps de carter (4) peut être ouvert pour le nettoyage des aimants (22, 24).

6. Outil électrique à main selon l'une ou plusieurs des revendications précédentes, **caractérisé en ce que** les aimants (22, 24) peuvent être retirés du corps de carter (4).

7. Outil électrique à main selon l'une ou plusieurs des revendications précédentes, **caractérisé en ce que** les aimants (22, 24) sont disposés dans une cage coulissante à l'intérieur du corps de carter (4) et peuvent ainsi être extraits le long de la cage coulissante après l'ouverture du corps de carter (4).

8. Outil électrique à main selon l'une ou plusieurs des revendications précédentes, **caractérisé en ce que**, lorsqu'ils sont en bonne position à l'intérieur du corps de carter (4), les aimants (22, 24) sont mis en contact électrique de façon séparable, en particulier par des contacts chargés par ressort.

9. Outil électrique à main selon l'une ou plusieurs des revendications précédentes, **caractérisé en ce que**, considérés en coupe perpendiculaire à la direction longitudinale du corps de carter (4), les aimants (22, 24) sont incurvés, en particulier en forme de coquille.

10. Outil électrique à main selon l'une ou plusieurs des revendications précédentes, **caractérisé en ce que** les aimants (22, 24) entourent un passage d'écoulement du flux d'air de refroidissement.
